# EUROPÄISCHE PATENTSCHRIFT

(11) **EP 0 298 254 B1**
(45) Veröffentlichungstag und Bekanntmachung des Hinweises auf die Patenterteilung: **29.09.1993**
(21) Anmeldenummer: 88108756.3
(22) Anmeldetag: 01.06.1988
(51) Int. Cl.: F02M 41/12, F02M 45/06

(54) **Kraftstoffeinspritzpumpe**
Fuel injection pump
Pompe à injection de combustible

(30) Priorität: 04.07.1987 DE 3722151
(43) Veröffentlichungstag der Anmeldung: 11.01.1989
(73) Patentinhaber: ROBERT BOSCH GMBH, 70442 Stuttgart (DE)
(72) Erfinder: Linder, Ernst, D-7130 Mühlacker (DE); Rembold, Helmut, D-7000 Stuttgart 40 (DE); Schlagmüller, Walter, D-7141 Schwieberdingen (DE)

(56) Entgegenhaltungen:
- EP-A- 0 177 752
- CH-A- 472 576
- DE-A- 3 430 143
- DE-A- 3 644 257
- FR-A- 1 348 807
- PATENT ABSTRACTS OF JAPAN, Band 5, Nr. 43 (M-60)[715], 23. März 1981

## Beschreibung

### Stand der Technik

Die Erfindung geht von einer Kraftstoffeinspritzpumpe nach der Gattung des Patentanspruchs 1 aus. Durch die DE-A-34 30 143 ist eine solche Kraftstoffeinspritzpumpe bekannt. Dort ist das bei jedem Arbeitshub des Pumpenkolbens in Abhängigkeit von der Last gesteuerte Ventil, daß die Kraftstoffeinspritzmenge pro Hub des Pumpenkolbens steuert, in Form eines Ringschiebers verwirklicht, der auf der Mantelfläche des Pumpenkolbens innerhalb eines Saugraumes, in den der Pumpenkolben taucht, verschiebbar ist und dort eine Verbindungsleitung zwischen Pumpenarbeitsraum bzw. den Pumpenarbeitsräumen und dem Saugraum steuert. Zusätzlich ist ein elektromagnetisch betätigter Schieber vorgesehen, der eine Verbindung zwischen einem ersten Pumpenarbeitsraum und einem zweiten Pumpenarbeitsraum mit ringförmiger Druckfläche steuert. Der erste Pumpenarbeitsraum ist dabei ständig mit einer Verteileröffnung verbunden, die in einer ersten Folge nacheinander Zuleitungen zu Kraftstoffeinspritzdüsen mit dem Pumpenarbeitsraum verbindet. Der zweite Pumpenarbeitsraum ist über den Schieber entweder mit dem ersten Pumpenarbeitsraum oder mit einer Verteileröffnung am Pumpenkolben verbunden, die in einer zweiten Folge nacheinander bei den einzelnen Pumpenhüben des Pumpenkolbens den Pumpenarbeitsraum mit den Zuleitungen verbindet. Mit Hilfe des Schiebers und der Stellung des Schiebers wird ein veränderlicher Anteil des vom zweiten Pumpenarbeitsraumg geförderten Kraftstoffs für eine Voreinspritzung in den jeweiligen Zylinder gesteuert. In diesem Zylinder erfolgt danach die Einspritzung der aus dem ersten Pumpenarbeitsraum verdrängten Hauptkraftstoffeinspritzmenge ergänzt gegebenenfalls durch die restliche aus dem zweiten Pumpenarbeitsraum über das Ventil 40 abgezweigten Einspritzmenge. Diese Einrichtung hat den Nachteil, daß für die Einspritzung zum einen feste geometrische Verhältnisse durch die aufeinanderfolgenden Verteileröffnungen vorgegeben sind, so daß immer durch die eine Verteileröffnung die Voreinspritzung erfolgt und zugleich gegebenenfalls über die andere Verteileröffnung eine mehr oder weniger große Erhöhung der vom ersten Pumpenarbeitsraum verdrängten Kraftstoffeinspritzmenge gesteuert wird. Die Einspritzmengen sind so in beständiger Abhängigkeit voneinander. Der Einspritzzeitpunkt bei Voreinspritzung und Haupteinspritzung wird zugleich durch die fest vorgegebenen geometrischen Verhältnisse an der Pumpe gesteuert, wie auch die Beendigung der Einspritzung durch den Ringschieber. Diese Pumpe ist somit sehr bauaufwendig, da sie den Verhältnissen einer bestimmten Brennkraftmaschine geometrisch durch vorgegebene Konstruktion optimierend angepaßt werden muß.

Durch die DE-A 36 44 257 ist zwar eine Kraftstoffeinspritzpumpe bekannt, bei der die Kraftstoffeinspritzmengensteuerung nicht durch einen Ringschieber sondern durch ein Magnetventil erfolgt, das den einzigen Pumpenarbeitsraum, der über eine Entlastungsleitung mit einem Pumpensaugraum verbunden ist, zum Beginn der gewünschten Kraftstoffeinspritzung verschließt und zum Ende nach Einspritzung der gewünschten Kraftstoffmenge wieder öffnet. Dort ist jedoch keinerlei Anregung dazu gegeben, wie möglicherweise eine in Vor- und Haupteinspritzung unterteilte Einspritzung anders als mit einem entsprechend angesteuerten Ventil gemäß dieser Veröffentlichung vorgenommen werden soll.

### Vorteile der Erfindung

Die erfindungsgemäße Kraftstoffeinspritzpumpe mit den kennzeichnenden Merkmalen des Patentanspruchs 1 hat gegenüber der gattungsbildenden Ausgestaltung den Vorteil, daß die Voreinspritzung und die Haupteinspritzung unabhängig voneinander mit größtmöglicher Variationsbreite gesteuert werden können, wobei sowohl Spritzbeginn als auch Einspritzmenge variiert werden können und die Kraftstoffeinspritzpumpe in wesentlich einfacherer Weise ausgeführt werden kann.

Durch die in den Unteransprüchen aufgeführten Merkmale werden vorteilhafte Weiterbildungen und Verbesserungen der im Hauptanspruch angegebenen Kraftstoffeinspritzpumpe erreicht.

### Zeichnung

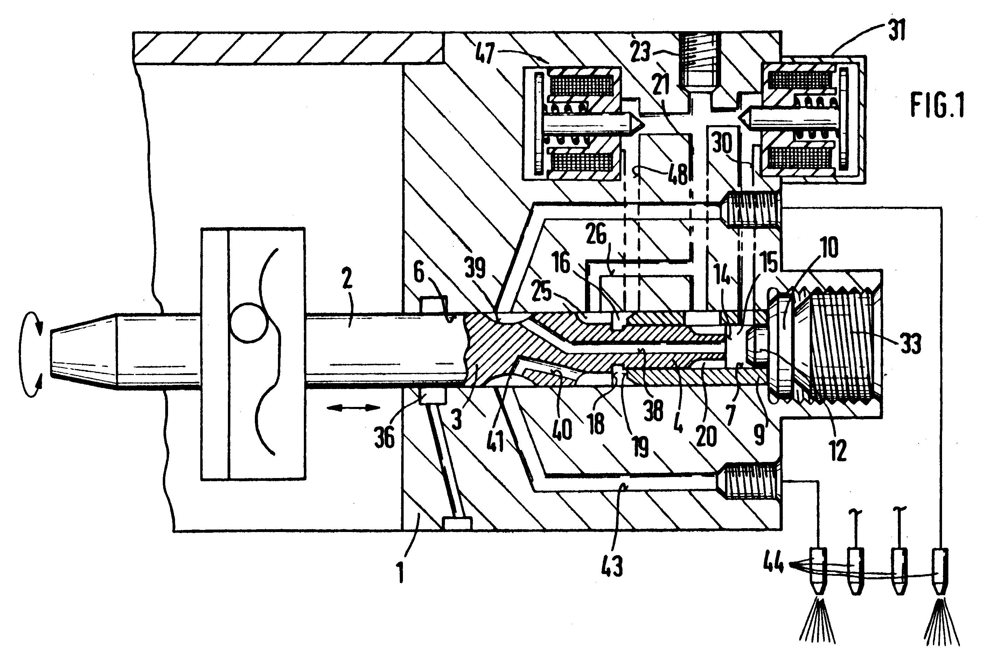

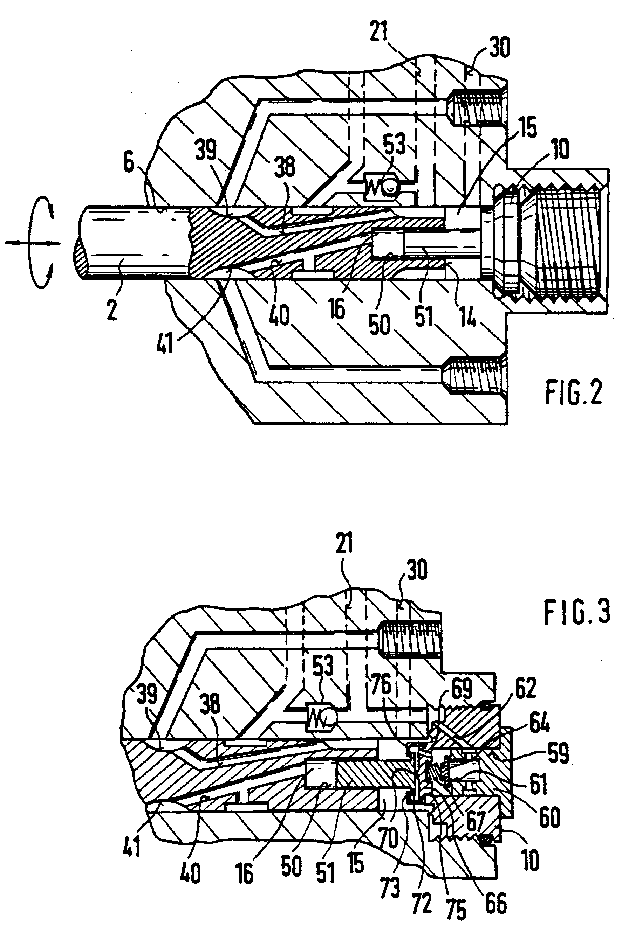

Ausführungsbeispiele der Erfindung sind in der Zeichnung vereinfacht dargestellt und werden im folgenden näher erläutert. Die Figuren 1 und 2 zeigen jeweils ausschnittsweise eine Kraftstoffeinspritzpumpe, Figur 3 ausschnittsweise eine weiterentwickelte Ausführungsform der in Figur 2 dargestellten Kraftstoffeinspritzpumpe.

### Beschreibung der Ausführungsbeispiele

Bei der in Figur 1 dargestellten Kraftstoffeinspritzpumpe ist in einem Gehäuse 1 ein Pumpenarbeitskolben 2 angeordnet, der eine hin- und hergehende und gleichzeitig rotierende Bewegung ausführt. Der Pumpenarbeitskolben 2 ist in an sich bekannter Weise durch einen Nockentrieb über eine Welle angetrieben, welche synchron zu der Drehzahl der von der Einspritzpumpe mit Kraftstoff versorgten Brennkraftmaschine rotiert. Bei Versorgung einer im 4-Takt-Verfahren arbeitenden Brennkraftmaschine dreht sich der Pumpenarbeitskolben mit der halben Kurbelwellendrehzahl. Der Pumpenarbeitskolben 2 besteht aus einem ersten zylindrischen Abschnitt 3 größeren Durchmessers und einem sich daran anschließenden zweiten zylindrischen Abschnitt 4 kleineren Durchmessers. Während der erste zylindrische Abschnitt 3 in einer Führungsbohrung 6 des Gehäuses 1 geführt ist, gleitet der zweite zylindrische Abschnitt 4 des Pumpenarbeitskolbens 2 in einer koaxialen, zentralen Bohrung 7 einer Hülse 9, welche mit ihrer Umfangsfläche in die Führungsbohrung 6 auf einen Teil von deren Länge eingepreßt ist. Nach außen hin ist die Hülse 9 durch einen als Verschlußteil dienenden Stopfen 10 verschlossen, welcher über einen zylindrischen Körper 12 gleichen Durchmessers wie der Durchmesser der zentralen Bohrung 7 verfügt, der teilweise in die zylindrische Bohrung 7 ragt und diese einseitig verschließt. Der zylindrische Körper 12 kann dazu dienen, die Hülse 9 aufzuweiten und diese innerhalb der Führungsbohrung 6 zu verspannen. Zwischen dem zylindrischen Körper 12 des Stopfens 10 und einer stirnseitigen Fläche 14 des Pumpenarbeitskolbens 2 erstreckt sich ein die Form eines Zylinders aufweisender erster Pumpenarbeistraum 15, dessen Größe von der axialen Stellung des Pumpenarbeitskolbens 2 abhängt. Ein die Form eines Ringes aufweisender zweiter Pumpenarbeitsraum 16 erstreckt sich zwischen einer den Übergang von ersten zylindrischen Abschnitt 3 auf den zweiten zylindrischen Abschnitt 4 bildenden Fläche 18 und einer Stirnseite 19 der Hülse 9. Auch die Größe des zweiten Pumpenarbeitsraumes 16 hängt von der axialen Stellung des Pumpenarbeitskolbens 2 relativ zum Gehäuse 1 ab. Der erste Pumpenarbeitsraum 15 ist über eine Füllnut 20 in der Mantelfläche des Pumpenarbeitskolbens 2 während des Saughubes desselben mit einer seitlich am Pumpenarbeitskolben 2 in den ersten Pumpenarbeitsraum 15 einmündenden Kraftsoffversorgungsleitung 21 verbunden. Diese ist über einen Druckanschluß 23 mit einer nicht dargestellten Kraftstoffversorgungsquelle verbunden. Während die beschriebenen Füllnuten 20 zur Krafstoffversorgung des ersten Pumpenarbeitsraumes 15 dienen, befinden sich in gleicher Weise gestaltete, weitere Füllnuten 25 in dem ersten zylindrischen Abschnitt 3 des Pumpenarbeitskolbens 2, wobei sich diese weiteren Füllnuten 25 in den zweiten Pumpenarbeitsraum 16 öffnen und zu des sen Füllung mit Kraftstoff dienen. Auch die weiteren Füllnuten 25 sind dazu, je nach Drehstellung des Pumpenarbeitskolbens 2, über einen Kraftstoffkanal 26 mit der Kraftstoffversorgungsquelle verbindbar.

Im Gehäuse 1 befindet sich ein Entlastungskanal 30, welcher einerseits in den ersten Pumpenarbeitsraum 15 und andererseits in die Kraftstoffversorgungsleitung 21 mündet und welcher mittels eines elektrisch steuerbaren Ventils 31, beispielsweise eines Magnetventils, verschließbar ist.

Der Stopfen 10, welcher mittels seines zylindrischen Körpers 12 in der zentralen Bohrung 7 der Hülse 9 zentriert ist, ist axial durch ein Befestigungsteil 33 gesichert, welches beispielsweise in Form einer gehäusefesten Verschraubung ausgeführt sein kann.

Wird die erfindungsgemäße Kraftstoffeinspritzpumpe zur Förderung von Otto-Kraftstoffen verwendet, so ist es vorteilhaft, in dem dem Stopfen 10 abgewandten Bereich der Führungsbohrung 6 eine umlaufende Sammelnut 36 vorzusehen, welche den leckenden Kraftstoff auffängt und in geeigneter Weise zur Kraftstoffversorgungsquelle zurückführt.

In dem Pumpenarbeitskolben 2 sind zwei Verbindungskanäle eingearbeitet. Ein erster Verbindungskanal 38 mündet einerseits in den ersten Pumpenarbeitsraum 15 und andererseits in eine erste Verteileröffnung 39, welche beispielsweise in Form einer längs verlaufenden Nut im Umfang des ersten zylindrischen Abschnittes 3 des Pumpenarbeitskolbens 2 eingearbeitet ist. Ein zweiter Verbindungskanal 40 mündet einerseits in den zweiten Pumpenarbeitsraum 16 und öffnet sich andererseits in eine zweite Verteileröffnung 41, welche um 180° versetzt zur ersten Verteileröffnung 39 auf gleicher axialer Länge wie diese angeordnet ist. Im Gehäuse 1 sind Zuleitungen 43 eingearbeitet, welche zu den die einzelnen Brennräume der Brennkraftmaschine versorgenden Einspritzventilen 44 führen. Die Zuleitungen 43 münden, um jeweils einen gleichen winkel zueinander versetzt, in die Führungsbohrung 6, und zwar in jenem Bereich, der durch die Verteilreöffnungen 39, 41 überstrichen wird, so daß bei jeder vollen Umdrehung des Pumpenarbeitskolbens 2 jede der Verteileröffnungen 39, 41 mit jeder der Zuleitungen 43 einmal in Verbindung steht. Die in der Zeichnung dargestellte Kraftstoffeinspritzpumpe für eine vierzylindrige 4-Takt-Brennkraftmaschine verfügt über vier Zuleitungen 43, welche in einem Winkel von jeweils 90° zueinander versetzt in die Führungsbohrung 6 münden. Die Erfindung läßt sich aber ebenfalls an Brennkraftmaschinen mit anderen Zylinderzahlen realisieren, wie noch gezeigt werden wird.

Zusätzlich zum elektrisch steuerbaren Ventile 31 verfügt die Kraftstoffeinspritzpumpe über ein weiteres elektrisch steuerbares Ventil 47, vorzugsweise ebenfalls ein Magnetventil, welches in seiner geschlossenen Stellung einen einerseits in den zweiten Pumpenarbeitsraum 16 mündenden und andererseits zur Kraftstoffversorgungsquelle führenden zusätzlichen Entlastungskanal 48 sperrt. Die Betätigung beider elektrisch steuerbarer Ventile 31, 47 erfolgt durch eine elektronische Steuereinheit in Abhängigkeit von Betriebsparametern der Brennkraftmaschine.

Die beschriebene Kraftstoffeinspritzpumpe arbeitet in der folgenden Weise:
Bei entsprechender Drehstellung des Pumpenarbeitskolbens 2 füllen sich die Pumpenarbeitsräume 15 und 16 über die Füllnuten 20 bzw. 25 mit Kraftsoff jenen Druckes, welcher durch die Kraftoffversorgungsquelle erzeugt und aufrechterhalten wird. Die Größe der Pumpenarbeitsräume 15, 16 ist dabei maximal. Bewegt sich der Pumpenarbeitskolben 2 in Richtung auf eine Verkleinerung der Pumpenarbeitsräume 15, 16, was infolge der gleichzeitigen Drehbewegung des Pumpenarbeitskolbens 2 mit einer Sperrung der Füllnuten 29, 25 einhergeht, so wird der Kraftsoff aus den Pumpenarbeitsräumen 15 bzw. 16 über die Verbindungskanäle 38 bzw. 40 zu den Verteileröffnungen 39 bzw. 41 gefördert, von wo der Kraftstoff dann über die jeweiligen Zuleitungen 43 zu zweien der Einspritzventile 44 gelangt. Die beschriebene Kraftstofförderung ist beendet, wenn entweder der Pumpenarbeitskolben 2 seine Endstellung erreicht oder wenn die elektrisch steuerbaren Ventile 31, 47 öffnen. Durch Betätigung des elektrisch steuerbaren Ventils 31 wird der Entlastungskanal 30 aufgesteuert, so daß der im ersten Pumpenarbeitsraum 15 befindliche Kraftstoff abströmen kann, ohne zur Abspritzung zu gelangen. Das in gleicher Weise arbeitende weitere elektrisch steuerbare Ventil 47 bewirkt eine Aufsteuerung des zusätzlichen Entlastungskanals 48, so daß Kraftstoff aus dem zweiten Pumpenarbeitsraum 16 abströmen kann. Durch entsprechende Schaltung der elektrisch steuerbaren Ventile 31, 47 lassen sich also Förderbeginn und Förderende der Kraftstoffeinspritzpumpe festlegen.

Unter der Voraussetzung, daß die durch den ersten Pumpenarbeitsraum 15 geförderte Kraftstoffmenge die Haupteinspritzung bewirkt, d.h., jenen Kraftstoff fördert, welcher unmittelbar vor der Zündung des Gemisches in den Brennraum gelangt, so wird der durch den zweiten Pumpenarbeitsraum 16 geförderte Kraftstoff jenem Zylinder der Brennkraftmaschine zugerfürht, der hierzu um 360° Kurbelwellenwinkel bzw. 180° Pumpenarbeitskolbenwinkel versetzt arbeitet. Die vom zweiten Pumpenarbeitsraum 16 geförderte Kraftstoffmenge dient also der Voreinspritzung und gelangt bei einem im Viertaktverfahren arbeitenden Otto-Motor zum Zeitpunkt des Ladungswechsels (Schließen Auslaßventil, Öffnen Einlaßventil) zum Arbeitszylinder. Selbstverständlich kann umgekehrt auch der zweite Pumpenarbeitsraum 16 die Haupteinspritzung und der erste Pumpenarbeitsraum 15 die Voreinspritzung vornehmen.

Für eine optimale Gemischbildung ist es vorteilhaft, die voreingespritzte Menge kleiner zu wählen als die zur Haupteinspritzung gelangende Menge, was entweder durch entsprechende Steuerung der elektrisch steuerbaren Ventile 31, 47 geschehen kann oder durch entsprechende Dimensionierung der Pumpenarbeitsräume 15, 16.

Die beschriebene Kraftstoffeinspritzpumpe ermöglicht eine Voreinspritzung um 360° Kurbelwellenwinkel bei Brennkraftmaschinen mit gerader Zylinderzahl. Bei ungerader Zylinderzahl (z.B. fünf Zylinder) ist zwar ebenfalls eine Voreinspritzung möglich, jedoch nicht im Ladungswechsel. Der Winkel zwischen den Verteileröffnungen 39, 41 muß entsprechend modifiziert werden, so daß von den Verteileröffnungen 39, 41 jeweils zwei der Zuleitungen 43 überdeckt werden.

Ein zweites Ausführungsbeispiel der Erfindung zeigt die Figur 2, in der gleichwirkende Bauteile mit den gleichen Bezugszeichen versehen sind. Im Gegensatz zum ersten Ausführungsbeispiel ist der Pumpenarbeitskolben 2 nicht als Stufenkolben ausgeführt, sondern sein Durchmesser ist über der gesamten Länge gleich. Im Pumpenarbeitskolben 2 befindet sich, dem Stopfen 10 zugewandt, eine Sackbohrung 50, in die ein mit dem Stopfen 10 fest verbundener, koaxialer Führungszapfen 51 dichtend hineinragt. Der erste Pumpenarbeitsraum 15 ist durch die stirnseitige Fläche 14 des Pumpenarbeitskolbens 2 einerseits und den Stopfen 10 andererseits begrenzt, während der zweite Pumpenarbeitsraum 16 durch den vom Führungszapfen 51 in der Sackbohrung 50 begrenzten Raum gebildet wird. In bereits beschriebener Weise steht die erste Verteileröffnung 39 über den ersten Verbindungskanal 38 mit dem ersten Pumpenarbeitsraum 15 und die zweite Verteileröffnung 41 über den zweiten Verbindungskanal 40 mit dem zweiten Pumpenarbeitsraum 16 in Verbindung.

Ein weiterer Unterschied zum ersten Ausführungsbeispiel besteht in der Art und Weise der Kraftstoffzuführung zum zweiten Pumpenarbeitsraum 16: Anstelle der Füllnuten wird ein Rückschlagventil 53 verwendet, welches in zweckmäßiger Weise zwischen die Kraftstoffversorgungsleitung 21 und den zweiten Pumpenarbeitsraum 16 geschaltet ist und welches eine Durchströmung nur in Richtung auf den zweiten Pumppenarbeitsraum 16 zuläßt. Rückschlagventil und Füllnut sind gleichwirkende Bauteile und können alternativ zur Anwendung kommen.

Die Figur 3 zeigt eine Kraftstoffeinspritzpumpe ähnlich wie in Figur 2 dargestellt, bei der jedoch auch die Füllung des ersten Pumpenarbeitsraumes 15 über ein Rückschlageventil erfolgt. Hierzu befindet sich innerhalb einer Aufnahmebohrung 59 des als Verschlußteil dienenden Stopfens 10 ein Ventilsitzkörper 60, welcher über eine sich in Richtung auf den Pumpenarbeitskolben 2 öffnende Sackbohrung 61 verfügt. Die Sackbohrung 61 steht über einen Füllkanal 62 mit der Kraftstoffversorgungsleitung 21 in Verbindung und ist durch einen tellerförmigen Ventilkörper 64 verschließbar, welcher von der Kraft einer sich andererseits an einem Boden 66 der Aufnahmebohrung 59 abstützenden Druckfeder 67 beaufschlagt ist. Eine Verbindungsöffnung 69 mündet eineseits am Boden 66 der Aufnahmebohrung 59 und andererseits in den ersten Pumpenarbeitsraum 15. An einer in den ersten Pumpenarbeitsraum 15 ragenden, zentrischen Erhebung 70 des Bodens 66 stützt sich der Führungszapfen 51 ab, welcher bei diesem Ausführungsbeispiel nicht starr, sondern beweglich angeordnet ist.

Der in erster Linie zylindrische Führungszapfen 51 läuft, dem Pumpenarbeitskolben 2 abgewandt, in einer Erweiterung in Form eines Kragens 72 aus, welcher zumindest auf einem Teil seines Umfangs von einem Haltebügel 73 umfaßt wird, welcher sich andererseits in einer ringförmigen Nut 75 des Stopfens 10 abstützt. Der Haltebügel 73 ist mit zweckmäßigen Strömungsöffnungen 76 versehen.

Durch den Haltebügel 73 einerseits und die Erhebung 70 im Boden 66 andererseits wird der Führungszapfen 51 in axialer Richtung gehalten, während zum Ausgleich eines eventuellen radialen Spiels des Führungszapfens 51 relativ zum Pumpenarbeitskolben 2 bzw. zum Stopfen 10 der Haltebügel 73 den Kragen 72 in der Weise mit Spiel umfaßt, daß ein Ausgleich radialer Bewegungen des Führungszapfens 51 möglich ist. Dies kann notwendig sein, da der Führungszapfen 51 und die Sackbohrung 50 im Pumpenarbeitskolben 2 nur schwer zentrisch zueinander herstellbar sind.

Bei dem Ausführungsbeispiel entsprechend Figur 3 erfolgt die Füllung des ersten Pumpenarbeitsraumes 15 über das Rückschlagventil, welches durch den die Sackbohrung 61 verschließenden, von der Druckfeder 67 beaufschlagten, tellerförmigen Ventilkörper 64 gebildet wird. Bei einer Füllbewegung des Pumpenarbeitskolbens 2 wird durch den sich einstellenden Unterdruck im ersten Pumpenarbeitsraum 15 Kraftstoff über die Kraftstoffversorgungsleitung 21 und den Füllkanal 62 in die Sackbohrung 61 gezogen, von wo er dann über das geöffnete Rückschlagventil und über die Verbindungsöffnung 69 in den ersten Pumpenarbeitsraum 15 gelangt. Während der Förderbewegung des Pumpenarbeitskolbens 2 hingegen schließt der Ventilkörper 64 die Sachbohrung 61, Kraftstoff kann deshalb über den ersten Verbindungskanal 38 zur jeweiligen Kraftstoffeinspritzstelle gelangen oder über den steuerbaren Entlastungskanal 30 abströmen.

Die ein radiales Spiel zulassende Lagerung des Führungszapfens 51 kann selbstverständlich auch auf andere Weise realisiert werden, beispielsweise durch eine elastiche Befestigung des Führungszapfens 51 am Stopfen 10. Ebenso ist es möglich, den Führungszapfen 51 selbst als Ventilkörper des Rückschlagventiles heranzuziehen, welcher mit einem am Stopfen 10 ausgebildeten Ventilsitz zusammenarbeitet.

Die Voreinspritzung im Ladungswechselzeitpunkt bietet den Vorteil einer Leistungssteigerung der Brennkraftmaschine gegenüber einer normalen, einmaligen Einspritzung. Die dabei abgespritzte Kraftstoffmenge sollte in etwa 30 bis 40 % der Haupteinspritzmenge betragen.

## Patentansprüche

1. Kraftstoffeinspritzpumpe für Brennkraftmaschinen mit einem in einer Führungsbohrung (6) periodisch hin- und hergehend und zugleich rotierend angetriebenen und dabei als Verteiler wirkenden Pumpenkolben (2), der über an seiner Mantelfläche mündende Verteileröffnungen (39, 41) verfügt, welche je nach Drehstellung des Pumpenkolbens während des Förderhubs gleichzeitig mit zu verschiedenen Kraftstoffeinspritzstellen an der Brennkraftmaschine führenden, in einem festen Winkel zueinander versetzt von der Führungsbohrung abzweigenden Zuleitungen (43) in Verbindung stehen und der Pumpenkolben axial zueinander versetzte Flächen (14, 18) aufweist, die mindestens zwei voneinander unabhängige und mit den Verteileröffnungen (39, 41) in Verbindung stehende Pumpenarbeitsräume (15, 16) begrenzen, wobei bei jedem Saughub des Pumpenkolbens die Pumpenarbeitsräume (15, 16) über am Pumpenkolbenumfang vorgesehene Füllöffnungen (25, 20) und jeweils über Kraftstoffkanäle (26) mit einer Kraftstoffversorgungsquelle verbunden sind und bei jedem Arbeitshub des Pumpenkolbens (2) einer der Pumpenarbeitsräume (15, 16) mit einer der Kraftstoffeinspritzstellen und ein anderer der Pumpenarbeitsräume (15, 16) mit einer anderen der Kraftstoffeinspritzstellen verbunden ist und jeder der Pumpenarbeitsräume (15, 16) bei jedem Arbeitshub des Pumpenkolbens über ein in Abhängigkeit von der Last gesteuertes Ventil (31, 47) in einer Entlastungsleitung (30) mit einem Entlastungsraum verbindbar ist, wobei von jedem der Pumpenarbeitsräume (15, 16) eine ein Ventil (31, 47) enthaltene Entlastungsleitung (30, 48) abführt und durch den Schließzustand der Ventile die Phase der Hochdruckeinspritzung nach Dauer und Winkellage des Einspritzendes gesteuert wird dadurch gekennzeichnet, daß jedes der Ventile (31, 47) elektrisch gesteuert ist und durch den Beginn seines Schließzustands die Winkellage des Einspritzbeginns steuert.

2. Kraftstoffeinspritzpumpe nach Anspruch 1, dadurch gekennzeichnet, daß in der Führungsbohrung (6) eine Hülse (9) befestigt ist und daß der Pumpenkolben (2) als in zwei zylindrische Abschnitte (3, 4) unterschiedlichen Durchmessers unterteilter Stufenkolben ausgebildet ist, dessen erster zylindrischer Abschnitt (3) in der Führungsbohrung (6) gleitet und dessen zweiter zylindrischer Abschnitt (4) in einer zentralen Bohrung (7) der Hülse (9) gleitet (Figur 1).

3. Kraftstoffeinspritzpumpe nach Anspruch 2, dadurch gekennzeichnet daß die Führungsbohrung (6) bzw. die Hülse (9) durch ein Verschlußteil (10) verschlossen sind, das mit einem zylindrischen Körper (12) teilweise in die zentrale Bohrung (7) der Hülse (9) ragt.

4. Kraftstoffeinspritzpumpe nach Anspruch 3, dadurch gekennzeichnet, daß das Verschlußteil (10) als Stopfen ausgebildet ist, welcher durch ein Befestigungsteil (33) axial gesichert ist.

5. Kraftstoffeinspritzpumpe nach Anspruch 1, dadurch gekennzeichnet, daß die Führungsbohrung (6) durch ein gehäusefestes Verschlußteil (10) verschlossen ist, das mit einem in die Führungsbohrung (6) ragenden Führungszapfen (51) versehen ist, welcher teilweise in eine Sackbohrung (50) des Pumpenkolbens (2) hineinragt und dort den zweiten Pumpenarbeitsraum (16) bildet, während der erste Pumpenarbeitsraum (15) zwischen dem Pumpenkolben (2) und dem Verschlußteil (10) gebildet ist (Figuren 2 und 3).

6. Kraftstoffeinspritzpumpe nach Anspruch 5, gekennzeichnet durch ein als Teil des Verschlußteiles (10) ausgebildetes Rückschlagventil (60, 64, 67), über welches während des Saughubes des Pumpenkolbens (2) der erste Pumpenarbeitsraum (15) mit der Kraftstoffversorgungsquelle verbindbar ist (Figur 3).

7. Kraftstoffeinspritzpumpe nach Anspruch 5 oder 6, dadurch gekennzeichnet, daß der Führungszapfen (51) radial beweglich gelagert ist.

8. Kraftstoffeinspritzpumpe nach einem der vorhergehenden Ansprüche, dadurch gekennzeichnet, daß die Kraftstoffeinspritzstellen in den Brennräumen einer fremdgezündeten Brennkraftmaschine liegen.

## Claims

1. Fuel-injection pump for internal-combustion engines, with a pump piston (2) which is periodically driven to and fro and at the same time in rotation in a guide bore (6) and thereby acts as a distributor and which has distributor orifices (39, 41) which open out on its outer surface and which, depending on the rotary position of the pump piston, during the feed stroke are simultaneously connected to delivery lines (43) leading to different fuel-injection points on the internal-combustion engine and branching off from the guide bore in a manner offset at a fixed angle to one another, the pump piston having faces (14, 18) which are offset axially relative to one another and which limit at least two pump working spaces (15, 16) independent of one another and connected to the distributor orifices (39, 41), during each suction stroke of the pump piston the pump working spaces (15, 16) being connected to a fuel-supply source via filling orifices (25, 20) provided on the pump piston circumference and via respective fuel channels (26), and during each working stroke of the pump piston (2) one of the pump working spaces (15, 16) being connected to one of the fuel-injection points and another of the pump working spaces (15, 16) being connected to another of the fuel-injection points, and during each working stroke of the pump piston each of the pump working spaces (15, 16) being connectable to a relief space via a valve (31, 47) controlled in dependence on the load and located in a relief line (30), a relief line (30, 48) which contains a valve (31, 47) leading off from each of the pump working spaces (15, 16), and the phase of the high-pressure injection being controlled in terms of duration and the angular position of the end of injection by means of the closing state of the valves, characterised in that each of the valves (31, 47) is controlled electrically and controls the angular position of the start of injection by means of the start of its closing state.

2. Fuel-injection pump according to Claim 1, characterised in that a sleeve (9) is fastened in the guide bore (6), and in that the pump piston (2) is designed as a stepped piston which is subdivided into two cylindrical portions (3, 4) of differing diameter and the first cylindrical portion (3) of which slides in the guide bore (6) and the second cylindrical portion (4) of which slides in a central bore (7) of the sleeve (9) (Figure 1).

3. Fuel-injection pump according to Claim 2, characterised in that the guide bore (6) or the sleeve (9) are closed by means of a closing part (10) which partially projects with a cylindrical body (12) into the central bore (7) of the sleeve (9).

4. Fuel-injection pump according to Claim 3, characterised in that the closing part (10) is designed as a plug which is secured axially by means of a fastening part (33).

5. Fuel-injection pump according to Claim 1, characterised in that the guide bore (6) is closed by means of a closing part (10) which is fixed to the housing and which is provided with a guide pin (51) which projects into the guide bore (6) and partially projects into a blind bore (50) of the pump piston (2) and which forms the second pump working space (16) there, whilst the first pump working space (15) is formed between the pump piston (2) and the closing part (10) (Figures 2 and 3).

6. Fuel-injection pump according to Claim 5, characterised by a non-return valve (60, 64, 67) which is designed as part of the closing part (10) and via which the first pump working space (15) can be connected to the fuel-supply source during the suction stroke of the pump piston (2) (Figure 3).

7. Fuel-injection pump according to Claim 5 or 6, characterised in that the guide pin (51) is mounted so as to be radially movable.

8. Fuel-injection pump according to one of the preceding claims, characterised in that the fuel-injection points are located in the combustion spaces of a spark-ignition internal-combustion engine.

## Revendications

1. Pompe d'injection de carburant pour moteur à combustion interne, avec un piston de pompe (2) entraîné d'un mouvement périodique d'aller et retour et en même temps, d'un mouvement de rotation, dans un alésage de guidage (6) et ayant alors une fonction de répartition, pour laquelle ce piston comporte des orifices de répartition (39, 41) débouchant sur sa surface enveloppe et qui, selon la position de rotation du piston de pompe pendant la course de refoulement, sont simultanément en communication avec des canalisations d'alimentation (43) partant de l'alésage de guidage en étant décalées d'un angle fixe les unes par rapport aux autres, et aboutissant à différents points d'injection de carburant sur le moteur à combustion interne, et le piston de pompe comporte des surfaces (14, 18) décalées axialement l'une par rapport à l'autre, qui délimitent au moins deux chambres de travail (15, 16) de la pompe, indépendantes l'une de l'autre, et qui sont en communication avec les orifices de répartition (39, 41), tandis que lors de chaque course d'aspiration du piston de pompe, ces chambres de travail (15, 16) de la pompe sont reliées par l'intermédiaire d'orifices de remplissage (25, 20) prévus sur la périphérie du piston de pompe et respectivement par l'intermédiaire de canaux de carburant (26) à une source d'alimentation en carburant, et que lors de chaque course de refoulement du piston de pompe (2), une des chambres de travail (15, 16) de la pompe est reliée à un des points d'injection de carburant, tandis que l'autre des chambres de travail (15, 16) de la pompe, est reliée à un autre point d'injection de carburant, et chacune des chambres de travail (15, 16) de la pompe, lors de chaque course de refoulement du piston de pompe, est susceptible d'être reliée à une chambre de décharge par l'intermédiaire d'une soupape (31, 47) commandée en fonction de la charge sur une canalisation de décharge (30, 48), cependant qu'à partir de chaque chambre de travail (15, 16) de la pompe, part une canalisation de décharge (30, 48) comportant une soupape (31, 47), et la phase d'injection à haute pression est commandée en durée et en position angulaire de la fin d'injection par l'état de fermeture des vannes, pompe d'injection de carburant caractérisée en ce que chacune des soupapes (31, 47) est commandée électriquement et commande par le début de son état de fermeture, la position angulaire du début de l'injection.

2. Pompe d'injection de carburant selon la revendication 1, caractérisée en ce que, dans l'alésage de guidage (6) est fixée une douille (9) et en ce que le piston de pompe (2) est réalisé sous la forme d'un piston étagé subdivisé en deux tronçons cylindriques (3, 4) de diamètre différent, dont le premier tronçon cylindrique (3) glisse dans l'alésage de guidage (6) et dont le second tronçon cylindrique (4) glisse dans l'alésage central (7) de la douille (9), (figure 1).

3. Pompe d'injection de carburant selon la revendication 2, caractérisée en ce que l'alésage de guidage (6) ou bien la douille (9) sont fermés par une pièce de fermeture (10) qui fait partiellement saillie dans l'alésage central (7) de la douille (9) par un corps cylindrique (12).

4. Pompe d'injection de carburant selon la revendication 3, caractérisée en ce que la pièce de fermeture (10) revêt la forme d'un bouchon, qui est bloqué axialement par une pièce de fixation (33).

5. Pompe d'injection de carburant selon la revendication 1, caractérisée en ce que l'alésage de guidage (6) est fermé par une pièce de fermeture (10) solidaire du boîtier et qui est munie d'un tourillon de guidage (51) faisant saillie dans l'alésage de guidage (6), et qui pénètre partiellement dans un perçage borgne (50) du piston de pompe (2) et y délimite la seconde chambre de travail (16) de la pompe, tandis que la première chambre de travail (15) de la pompe est délimitée entre le piston de pompe (2) et la pièce de fermeture (10) (figures 2 et 3).

6. Pompe d'injection de carburant selon la revendication 5, caractérisée en ce qu'elle comporte une soupape de retenue (60, 64, 67), par l'intermédiaire de laquelle, pendant la course d'aspiration du piston de pompe (2), la première chambre de travail (15) de la pompe est susceptible d'être reliée à la source d'alimentation en carburant (figure 3).

7. Pompe d'injection de carburant selon la revendication 5 ou la revendication 6, caractérisée en ce que le tourillon de guidage (51) est monté de façon à être mobile radialement.

8. Pompe d'injection de carburant selon une des précédentes revendications, caractérisée en ce que les points d'injection de carburant se situent dans les chambres de combustion d'un moteur à combustion interne à allumage commandé.
